# EUROPEAN PATENT APPLICATION

(11) **EP 2 623 281 A1**
(43) Date of publication of application: **07.08.2013**
(21) Application number: 12153359.0
(22) Date of filing: 31.01.2012
(51) Int. Cl.: B27K 5/02, B27K 5/00, C08H 8/00

(54) **Acetylated wood**

(71) Applicant: Titan Wood Limited, Windsor SL4 1BE (GB)
(72) Inventor: Alexander, John, West Kirby, Wirral CH48 4EU (GB); Bongers, Ferry, 6921 SW Duiven (NL)
(74) Representative: Jansen, Cornelis Marinus

(57) **Abstract**

Disclosed is acetylated wood comprising one or more end grain surfaces, wherein the wood is selected from the species Red Alder and European Alder. The acetylation of these wood species surprisingly results in a lowering of the water absorption by immersion at an end-grain surface. Thus, acetylation can be used for the purpose of lowering the water absorption by immersion at an end-grain surface of wood selected from the group consisting of Red Alder and European Alder. The invention also pertains to wood having tangential surfaces, showing a surprising extent of aggregate rays. Further disclosed is a method of providing stable discoloured acetylated Red Alder [and European Alder], comprising a step of subjecting the acetylated wood to UV exposure.

## Description

### Field of the Invention

The invention is in the field of acetylated solid wood. Particularly, the invention is in the field of solid wood pieces, such as beams or boards, having improved end-grain surface characteristics.

### Background of the invention

Acetylation of wood has long been recognized as a method to improve the durability of otherwise non-durable softwood species. Also, it is known as a method to improve wood properties, such as hardness and dimensional stability.

Throughout the decades since 1928, various processes for wood acetylation have been proposed. A background reference pertaining to a particularly suitable process is WO 2009/095687. Other references include EP 0 650 998, EP 0 799 272, WO 2010/151320. The various acetylation processes are disclosed in connection with various wood species, such as radiata pine, beech, poplar, southern yellow pine, spruce.

After decades of studies, and the availability of wide varieties of wood species, commercial developments have thus far been limited to few species, particularly pine, such as Southern Yellow Pine and Radiata Pine. The latter, known under the brand name Accoya® is finding increasingly widespread recognition as a gold standard in the art.

A great advantage of acetylated solid wood is that it allows outdoor use generally without significant protective measures, such as coatings. However, a consistent challenge in any outdoor use of wood, including for acetylated wood such as Accoya® radiata pine, is related to the general vulnerability of end-grain wood (wood cut orthogonally to the direction of length growth). In practice this means that the end-grain surfaces of such wood are prone to water-uptake.

The vulnerability of end-grain surfaces of wood towards water uptake, is not necessarily improved as a result of acetylation. In fact, for radiata pine it can be established that end grains absorb more water after acetylation than in the native form.

It would be desired to provide wood parts in which the general advantages of wood acetylation are combined with an improvement in the water-uptake of end-grain surfaces.

### Summary of the Invention

In order to better address one or more of the foregoing desires, the invention presents, in one aspect, acetylated wood comprising one or more end grain surfaces, wherein the wood is selected from the species Red Alder and European Alder.

In another aspect, the invention is the use of acetylation for the purpose of lowering the water absorption by immersion at an end-grain surface of wood, selected from the group consisting of Red Alder and European Alder,

In yet another aspect, the invention resides in the use of wood, selected from the group consisting of Red Alder and European Alder, for the purpose of providing acetylated wood that shows a lower water absorption than the corresponding native wood.

### Detailed description of the Invention

The invention, in a broad sense, is based on the unexpected finding that the acetylation of Red Alder, and also for European Alder, results in a behaviour for end-grain wood opposite to that of Radiata Pine. In the latter wood species, the typical results for water uptake are as follows: radial surfaces absorb significantly less water when acetylated, as compared to native wood. For tangential surfaces, the water uptake in the event of acetylated wood is similar, or slightly above that of non-acetylated wood. For end-grain surfaces, however, the acetylated wood shows approximately a 50% higher water uptake than the non-acetylated wood.

To the inventors' surprise, and in fact against any normal expectation in the art, the acetylation of Red Alder, and also of European Alder, results in a considerable lowering of the water-uptake by end-grain surfaces, as well as a substantial improvement for tangential surfaces as well.

This is highly surprising, since a comparison of the native wood species Radiata Pine as against Red Alder (and also European Alder) is to the disadvantage of Red Alder (and European Alder) in this regard. End-grain surfaces of native Red Alder subjected to a water absorption test absorb substantially more water than end-grain surfaces of Radiata Pine. Hence, the person skilled in the art confronted with the problem of improving the water absorption behaviour of wood comprising end-grain surfaces, would be prejudiced against considering Red Alder for this purpose. Rather, based on the normal increase of water absorption by end-grain surfaces, and based on the starting comparison of Red Alder and Radiata Pine, the skilled person would expect the above problem to be worse for Red Alder than for Radiata Pine.

As a result of acetylation, however, the Red Alder behaves unexpectedly differently. The water-uptake at the end-grain surfaces is about half of that of native Red Alder, and therewith not only much lower than that of acetylated Radiata Pine, but even improved as compared to non-acetylated Radiata Pine.

The foregoing can be illustrated, without this illustration being limiting to the invention, with reference to the following table. The test method will be described hereinafter. In the table, results are shown for various wood surfaces in the case of non-acetylated and acetylated Radiata Pine and Red Alder.

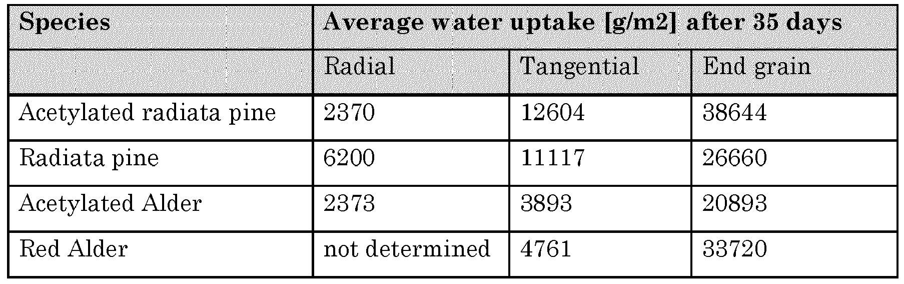

The invention pertains to Red Alder, also known by its binomial name as *Alnus rubra.* The invention also pertains to European Alder, also known as *Alnus glutinosa.* These Alder species are similar in properties and behaviour.

The invention pertains to wood comprising one or more end-grain surfaces. Taking into account the natural growth of trees, when timber is cut into parts such as beams or boards, one can distinguish three surfaces. These surfaces are defined with reference to the pattern of growth rings (sometimes also referred to as seasonal rings, annual rings, or tree rings). Parallel to the longitudinal growth direction of the tree, one will have two surfaces parallel to the growth rings, one radial and one tangential. The third possible surface is perpendicular to the length of the tree, and this surface (where typically the pattern of growth rings is visible as, more or less concentric circles) is an end-grain surface (also referred to as transverse or cross-section). Concerning the definitions of growth rings and wood surfaces, reference is made to Desch & Dinwoodie (1996). Timber. Structure, properties, conversion and use. 7th edition. Macmillan Press LTD. ISBN. 0-333-60905-0, pages 10-11.

Where it is spoken of "wood" this can generally have any form, size or shape. Preferably, the invention pertains to pieces of solid wood, and more preferably to relative large pieces such as beams or boards.

The invention pertains to wood, selected from the group consisting of Red Alder and European Alder, that is acetylated. This refers to wood wherein hydroxyl groups present in the wood's lignocellulosic matrix, are converted into acetyl groups. This can be accomplished by generally any suitable acetylation process known in the art. Particular reference is made to processes involving the impregnation of wood with acetic anhydride, such as disclosed in WO 2009/095687 or WO 2010/151320.

A preferred process comprises the steps of (a) providing wood, generally in the form of beams; (b) drying the wood, e.g. as described in WO 2009/095687; (c) stacking the dried beams into a reactor; (d) subjecting the reactor to vacuum; (e) filling the reactor with acetylation fluid, comprising acetic anhydride and/or acetic acid; preferably 90-100% anhydride; the acetylation fluid is preferably heated, e.g. to 50°C -70°C; (f) after filling applying an impregnation pressure, e.g. 5 to 15 barg, and allowing the impregnation to occur (the impregnation time ranging possibly from several minutes to an hour), (g) emptying the reactor; (h) heating the reactor up to acetylation temperature and allowing acetylation to take place, generally at a wood temperature of 110°C -150°C for a time of 0.5 to 5 hours; (i) terminating the reaction by cooling so as to obtain a wood temperature below 100°C; (j) applying vacuum so as to remove chemical residues; (k) terminating the vacuum and opening the reactor so as to release the acetylated wood. The water uptake is determined by a water immersion test as follows: Radiata pine and Accoya samples (either dried wood as used before acetylation, conditioned at 65% RH, 20°C), or freshly acetylated wood) have been prepared with a dimension of 100 x 100 x 200 mm (thickness x width x length) to test the water uptake by the end grain. A dimension of 67 x 300 x 70 mm (width x length x thickness) is used to determine the water uptake of the radial and tangential surface. All surfaces, except 1 test surface (cross end: 100 x 100 mm, radial and tangential: 67 x 300 mm), are sealed with 2 layers 2-component epoxy (Poly-Pox GT 600 with Poly-Pox Harder 355). After preparation the samples have been weighed and put into a water bath of 20°C on stickers in such way that the test surface (cross end, tangential or radial surface) is approximately 5 cm below liquid water level. The samples have been weighed after 1, 2, 4, 7, 14, 21, 28 and 35 days. The water uptake is calculated as g/m2.

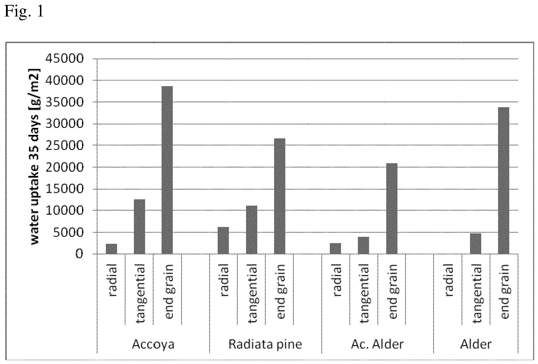

In Figure 1 the water uptake after 35 days is given for the different surfaces (radial, tangential and end grain) for Accoya (acetylated Radiata Pine), non-acetylated Radiata Pine, acetylated Red Alder, and non-acetylated Red Alder. Whilst the water uptake of the radial and tangential surface is similar, the water uptake by the end grain is higher for Accoya in comparison to untreated Radiata pine. For Red Alder, the effect at the end-grain surface is the opposite: the water uptake in the event of acetylated Red Alder is lower than that of non-acetylated Red Alder, and even lower than that of non-acetylated Radiata Pine.

The water absorption by immersion at an end-grain surface presents a surprising result. In connection herewith, the invention, in one aspect, also pertains to the use of acetylation for the purpose of lowering the water absorption by immersion at an end-grain surface of wood selected from the species Red Alder and European Alder. The acetylation preferably refers to the aforementioned acetylation processes. In a related, though still different, aspect, the invention resides in the use of wood selected from the species Red Alder and European Alder, for the purpose of providing acetylated wood that shows a lower water absorption than the corresponding native wood.

It will be understood, that the invention is particularly beneficial with a view to wood products that would typically comprise end-grain surfaces. Nonlimiting examples hereof are doors, windows, decking, cladding (siding), outdoor furniture, and boat decking.

The invention, in another aspect, relates to solid wood pieces, such as beams or boards, having a tangential surface with improved colouring. It has been found, surprisingly, that the acetylation of wood selected from the group consisting of Red Alder and European Alder, leads to marked aggregate rays (relative short stripes, 0.5 to 5 cm length generally, and a width which can be relatively large, e.g. up to 5 mm, but can also be narrower, typically below 1 mm, e.g. around 0.5 mm, of a darkened, even blackened, wood surface). Such rays are considered a feature showing the living, natural origin of wood, and are often valued for their aesthetic appeal. Red Alder (and also European Alder), generally being devoid of well-visible aggregate rays, a technical problem exists in providing Red Alder (and European Alder) in which such aggregate rays are pronounced. These aggregate rays, if present, are most typical for tangential wood. Accordingly, the invention also pertains to acetylated wood comprising one or more tangential surfaces, wherein the wood is selected from the species Red Alder and European Alder.

In a still further aspect, the invention addresses another technical issue related to wood aesthetics, particularly with a view to outdoor usage. Red Alder, [and also European Alder], are a darker coloured wood species than woods that until now have been known to be acetylated, such as radiata pine. An effect associated with acetylation is that the wood becomes lighter coloured. Herein batch to batch variations can occur. As a result, despite all of the positive characteristics of Red Alder (or European Alder) having been acetylated, this imposes some production challenges. For it would be desired to produce as constant a quality as possible, also in terms of colour. It has now been found that subjection of acetylated Red Alder (and of European Alder) to the influence of UV radiation leads to a discolouration so as to result in a stable, light wood colour. The latter colour is similar to that of acetylated Radiate Pine. In view of the original darker colour of Red Alder and European Alder, it could not have been predicted that the final colour after acetylation and UV exposure, would have been as light as now found, The process step of UV exposure can be conducted by outdoor exposure, for a period of one week to one month, preferably about two weeks. It will be understood that the UV exposure can also be done in an artificial manner, viz. by subjecting the wood to UV irradiation using UV lamps. The skilled person will be able to convert the above regime of outdoor exposure to a suitable choice of lamps and irradiation times. Accordingly, the invention further pertains to acetylated wood selected from the species Red Alder and European Alder, obtainable by subjecting the acetylated wood to UV exposure at a level of outdoor exposure for a period of one week to one month.

## Claims

1. Acetylated wood comprising one or more end grain surfaces,
wherein the wood is selected from the species Red Alder and European Alder.

2. Acetylated wood in accordance with claim 1, in the form of a beam or board.

3. A wood product selected from the group consisting of doors, windows, decking, cladding (siding), outdoor furniture, and boat decking, wherein the wood is acetylated wood according to claim 1.

4. The use of acetylation for the purpose of lowering the water absorption by immersion at an end-grain surface of wood selected from the group consisting of Red Alder and European Alder.

5. The use of wood selected from the group consisting of Red Alder and European Alder, for the purpose of providing acetylated wood that shows a lower water absorption than the corresponding native wood.

6. Acetylated wood comprising one or more tangential surfaces, wherein the wood is selected from the species Red Alder and European Alder.

7. Acetylated wood selected from the species Red Alder and European Alder, obtainable by subjecting the acetylated wood to UV exposure at a level of outdoor exposure for a period of one week to one month.
